# EUROPÄISCHE PATENTANMELDUNG

(11) **EP 1 359 509 A1**
(43) Veröffentlichungstag der Anmeldung: **05.11.2003**
(21) Anmeldenummer: 02009665.7
(22) Anmeldetag: 29.04.2002
(51) Int. Cl.: G06F 13/32

(54) **Mehrprozessorsystem**

(71) Anmelder: SIEMENS AKTIENGESELLSCHAFT, 80333 München (DE)
(72) Erfinder: Tuppa, Walter, Dr., 1170 Wien (AT)
(74) Vertreter: Berg, Peter, Dipl.-Ing.

(57) **Zusammenfassung**

Die Erfindung betrifft ein Mehrprozessorsystem, welches Speicherelemente (M) , Ein/Ausgabeeinheiten (I/O) und ein zentrales Bussystem (CB) umfasst, und wobei die Ein/Ausgabeeinheiten mittels Direct Memory Access über das zentrale Bussystem auf die Speicherelemente zugreifen, bei dem ein Busbeobachtungs-Element (BS) vorgesehen ist und bei dem das Busbeobachtungselement(BS) bei einem Schreib/Lese-Zugriff einer Ein/Ausgabeeinheit auf ein Speicherelement über das zentrale Bussystem die von der Ein/Ausgabeeinheit generierten Speicheradressen überwacht und auswertet und anhand dieser Adressen Interrupts an einzelne Prozessoren generiert.

Damit kann die Rechenleistung bei der parallelen Bearbeitung von Aufgaben erhöht werden.

## Beschreibung

Die Erfindung betrifft ein Mehrprozessorsystem, welches Speicherelemente, Ein/Ausgabeeinheiten und ein zentrales Bussystem umfasst und wobei die Ein/Ausgabeeinheiten mittels Direct Memory Access über das zentrale Bussystem auf die Speicherelemente zugreifen.

Zur Bewältigung der stetig steigenden Anforderungen an die Rechenleistung von Prozessorsystemen, die durch die steigende Leistungsfähigkeit der Prozessoren alleine nicht gelöst werden können, werden Mehrprozessorsysteme eingesetzt, bei denen die zu bearbeitenden Prozesse in Teilaufgaben gegliedert werden, um so eine parallele und damit beschleunigte Bearbeitung zu ermöglichen.

Wesentlich für die Effizienz der Bearbeitung ist dabei unter anderem die Kommunikation zwischen den einzelnen Verarbeitungselementen. Diese muss möglichst effizient erfolgen, d.h. der Aufwand für den Datenaustausch muss minimiert werden.

Eine übliche Form der Kommunikation ist der Datenaustausch über gemeinsame Speicherelemente, bei dem ein Verarbeitungselement die zu übermittelnden Daten in einen vordefinierten Speicherbereich ablegt, von wo sie vom empfangenden Element gelesen werden. Der Anstoß zu dem Lesevorgang kann bei gleichmäßig strukturierten Prozessen periodisch wiederkehrend, oder aber mittels Interrupt erfolgen. Letztere Methode wird vor allem bei der Kommunikation zwischen Peripheriebausteinen und einem oder mehreren Prozessoren verwendet, um die Prozessor-Tätigkeit mit dem nicht-periodischen und damit unvorhersehbaren Empfang von Daten zu synchronisieren.

Dabei wird das aktuell laufende Programm unterbrochen und ein spezielles Interrupt-Bearbeitungsprogramm (Interrupt-Handler) aufgerufen, welches überprüft, ob tatsächlich Daten vorliegen und die Datenübernahme durchführt. Bei Systemen, bei denen ein einzelnes Peripherieelement wie eine Ein/Ausgabeeinheit Daten an mehrere Prozessoren übermittelt und dazu nur unspezifische Interrupts generiert, muss bei jedem Interrupt jeder der Prozessoren sein aktuelles Programm unterbrechen, um festzustellen, ob die Daten für ihn bestimmt sind. Gerade bei Anwendungen in der Kommunikationstechnik, bei denen große Datenmengen zu verarbeiten sind, wird dadurch die Leistung eines Mehrprozessorsystemes erheblich herabgesetzt. Dies ist darüber hinaus auch deswegen von besonderer Bedeutung, weil bei der Planung eines Systems von einem Worst-case Szenario ausgegangen muss und damit für das System entsprechende Sicherheitsreserven eingeplant werden müssen.

Der Erfindung liegt daher die Aufgabe zugrunde, eine Lösung anzugeben, welche die Interruptbearbeitung auf eine effiziente Weise ermöglicht.

Diese Aufgabe wird erfindungsgemäß gelöst mit einem Mehrprozessorsystem der eingangs genannten Art, bei dem ein Busbeobachtungs-Element vorgesehen ist, und bei dem das Busbeobachtungselement bei einem Schreib/Lese-Zugriff einer Ein/Ausgabeeinheit auf ein Speicherelement über das zentrale Bussystem die von der Ein/Ausgabeeinheit generierten Speicheradressen überwacht, auswertet und anhand dieser Adressen Interrupts an einzelne Prozessoren generiert.

Moderne (RISC) Prozessoren benötigen zur Erkennung und Verarbeitung von Interrupts zumeist nur mehr einige µs (Verlassen des aktuellen Programms, Sichern der Registerdaten, Stackwechsel,.. und Restore) Zeit.

Da bei hohen Datenraten zu paketvermittelnden Systemen wie Computernetzwerken jedoch eine sehr hohe Zahl an Interrupts anfällt, wird durch die Erfindung die durch eine Ein/Ausgabeeinheit verursachte Interruptlast auf die Prozessoren verteilt d.h. jeder Prozessor bekommt nur dann einen Interrupt, wenn für ihn Daten bereit liegen. Damit werden auch unnötige Buszugriffe der Prozessoren verhindert und die Leistungsfähigkeit des Mehrprozessorsystems weiter erhöht.

Vorteilhaft ist es, wenn das zentrale Bussystem nach dem PCI-Standard aufgebaut ist. PCI (Peripheral Component Interconnect) ist ein Busstandard für lokale Datenbussysteme, d.h. für die direkte Verbindung von Mikroprozessoren. Der Standard hat bei einer Taktrate von 33/133 MHz einen Durchsatz von 132-1064 Mbyte/s. Die Busbreite beträgt 32/64 Bit.

Alternativ dazu sind auch solche anderen Bussysteme denkbar, welche die Speicheradresse definiert der Busbeobachtungseinheit zur Verfügung stellen. Dazu gehören beispielsweise Busysteme nach den folgenden Standards: RAPID I/O, lokale Prozessorbussysteme wie PPC60x- Busprotokoll oder MPX Busprotokoll für Risc PowerPC Prozessoren.

Günstig ist es, wenn der Zugriff einer Ein/Ausgabeeinheit auf ein Speicherelement über das zentrale Bussystem mittels Direct Memory Access (DMA) erfolgt.

Als DMA wird eine spezielle Art des direkten Speicherzugriffs bezeichnet, bei welcher der Speicherzugriff nicht von dem diesem Speicher zugeordneten Prozessor, sondern von einem eigenen DMA-Baustein durchgeführt wird. Dieses Verfahren ist schneller, als wenn der Prozessor den Speicherzugriff selbst abwickeln müsste.

Günstig ist es, wenn das Busbeobachtungselement als Application Specific Integrated Circuit (ASICs) ausgeführt ist. ASICS haben geringeren Platzbedarf und geringere Leistungsaufnahme als Standardbauelemente.

Alternativ dazu kann das Busbeobachtungselement auch als Field Programmable Gate Array ausgeführt werden, eine Lösung, die sich besonders für geringere Stückzahlen anbietet.

Als Prozessoren d.h. als datenverarbeitende Elemente können Standardprozessoren nach dem RISC-Prinzip, also mit reduziertem Befehlssatz oder CISC-Prozessoren, Signalprozessoren oder auch entsprechend programmierte ASICs eingesetzt werden.

Die Erfindung wird anhand einer Figur näher erläutert, welche ein Blockschaltbild eines Ausführungsbeispieles des erfindungsgemäßen Mehrprozessorsystems zeigt.

Das dargestellte Mehrprozessorsystem umfasst neben den Prozessoren CPU1,CPU2, ...CPUn, Speicherelemente M1, M2, ...Mn, Ein/Ausgabeeinheiten I/O, ein zentrales Bussystem CB, sowie ein erfindungsgemäßes Busbeobachtungs-Element BS.

Nicht dargestellt sind für die Funktion notwendige aber selbstverständliche Elemente wie die Stromversorgung, die Taktversorgung TS, Benutzerschnittstellen zur Anzeige des Betriebszustandes und zum Programmieren des Boardes und der Überwachungseinrichtung Ü.

Zur Speicherung baugruppenspezifischer Daten kann ein Permanentspeicher vorgesehen werden, der mittels EEPROMs realisiert wird. In einem zusätzlichen, aus ROM oder Flash-Speicherelementen aufgebauten Permanentspeicher kann ein Mikrocontroller zur Steuerung des Hochlaufes des Prozessors realisiert werden.

Als Speicher M sind 32 Mbyte SDRAM vorgesehen die mit DRAM oder SDRAM Speicherelementen mit einer jeweils minimalen Speicherkapazität von 32 Mbyte ausgestattet sind.

Die erhältlichen Ein-Ausgabebausteine selbst haben zumeist nur einen einzigen Interrupt zur Verfügung, der somit für alle Prozessoren über eine sogenannte PCI-Bridge gemeinsam benutzt werden muss. Der PCI - Standard definiert weiterhin pro Bus 4 Interrupt Quellen, die jeweils einer Ein/Ausgabeeinheit I/O zugeordnet werden. Sind mehr Ein/Ausgabeeinheiten I/O an einem PCI Bus vorgesehen, müssen diese zwangsläufig einen PCI Interrupt teilen.

Alle üblichen (schnellen) Ein/Ausgabeeinheiten I/O sind DMA fähig, d.h. sie besitzen die Möglichkeit Daten unabhängig von dem Prozessor aus dem Speicher M1, M2, ... Mn zur Verarbeitung zu laden bzw. dort abzuspeichern. Weiters werden oft Statusinformationen ebenfalls mittels DMA an einer definierten Speicherstelle abgelegt, da bei modernen Bussystemen Schreiboperationen viel schneller sind als Leseoperationen. Damit kann dann der Prozessor diese Information direkt aus dem (schnellen) Speicher lesen.

Diese DMA Zugriffe werden mittels Busbeobachtungs-Element BS überwacht und ausgewertet, und anhand der betroffenen Speicheradressen ein entsprechender Interrupt IRQ1, IRQ2, ..., IRQn für einen bestimmten Prozessor generiert und über einen Interruptbaustein der auch in den Prozessor integriert sein kann, an den Prozessor weitergeleitet.

Durch ein geeignetes Speicherlayout, d.h. die entsprechende Zuordnung der Speicherbereiche zu den einzelnen Prozessoren können die Anforderungen an die Logik des Busbeobachtungs-Elementes BS gering gehalten werden.

Das Ausführungsbeispiel wird als Gateway für den Datenaustausch zwischen Modemverbindungen nach dem ATM 25 Standard und Teilnehmern am einem Local Area Net nach dem Ethernetstandard eingesetzt. Die Aufgaben des Gateways umfassen die Umsetzung von Nutzdaten (Payload), ebenso wie der wesentlichen Daten für das Call-Processing, d.h. der für Aufbau, Abbau und Kontrolle der Verbindung wesentlichen Informationen und der Signalisierungsdaten zur Sicherstellung der Funktionsfähigkeit von Leistungsmerkmalen oder Dienstmerkmalen (Maintenance).

Die Daten werden über eine ATM (Asynchronous Transfer Mode)-Anbindung von Modem Pool Karten unabhängig über ATM25 (ATM-Übertragung mit 25,6 Mbps) und eine ATM-Vermittlungsstelle empfangen, von mehreren Prozessoren verarbeitet und über mehrere Ethernetschnittstellen an einen Ethernet-Switch weitergeleitet, wobei jeder Prozessor seine Pakete unabhängig von den anderen Prozessoren verarbeitet. Ein Prozessor behandelt alle Call Processing und Maintenance Daten, die anderen verarbeiten die Payload Pakete.

Die Ein/Ausgabeeinheit ist in diesem Fall ein ATM-SAR Baustein mit eigenem PCI-Interface und DMA-Fähigkeit. Jedem Prozessor ist ein eigener Speicher zugeordnet, der über die jedem Prozessor zugeordnete PCI-Bridge von der Ein/Ausgabeeinheit I/O gelesen und geschrieben werden kann. Die Busbeobachtungseinheit beobachtet am 64Bit breiten PCI-BUS die Adressinformationen und generiert aus diesen Interrupts für den jeweiligen Prozessor.

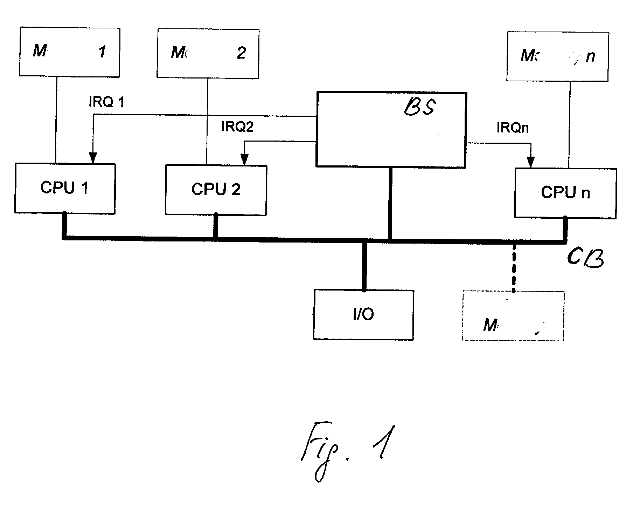

## Patentansprüche

1. Mehrprozessorsystem, welches Speicherelemente (M1, M2, ... Mn), Ein/Ausgabeeinheiten (I/O) und ein zentrales Bussystem (CB) umfasst, und wobei die Ein/Ausgabeeinheiten mittels Direct Memory Access über das zentrale Bussystem auf die Speicherelemente zugreifen, **dadurch gekennzeichnet, dass** ein Busbeobachtungs-Element (BS) vorgesehen ist, und dass das Busbeobachtungselement(BS) bei einem Schreib/Lese -Zugriff einer Ein/Ausgabeeinheit auf ein Speicherelement über das zentrale Bussystem die von der Ein/Ausgabeeinheit generierten Speicheradressen überwacht und auswertet und anhand dieser Adressen Interrupts (IRQ1, IRQ2, ..., IRQn)an einzelne Prozessoren generiert.

2. Mehrprozessorsystem nach Anspruch 1, **dadurch gekennzeichnet, dass** als Ein/Ausgabeeinheit ein Schnittstellentreiber für Ethernet vorgesehen ist.

3. Mehrprozessorsystem nach einem der Ansprüche 1 oder 2, **dadurch gekennzeichnet, dass** das zentrale Bussystem nach dem PCI-Standard aufgebaut ist.

4. Mehrprozessorsystem nach einem der Ansprüche 1 bis 3, **dadurch gekennzeichnet, dass** das Busbeobachtungselement(BS) als Application Specific Integrated Circuit ausgeführt ist.

5. Mehrprozessorsystem nach einem der Ansprüche 1 bis 3, **dadurch gekennzeichnet, dass** das Busbeobachtungselement(BS) als Field Programmable Gate Array ausgeführt ist.
